# EUROPEAN PATENT APPLICATION

(11) **EP 1 983 796 A1**
(43) Date of publication of application: **22.10.2008**
(21) Application number: 08100048.1
(22) Date of filing: 03.01.2008
(51) Int. Cl.: H04Q 7/38, H04L 29/06, H04L 12/56, H04L 12/28

(54) **Handover from E-UTRAN to UTRAN/GERAN CS**

(30) Priority: 17.04.2007 GB 0707387
(71) Applicant: Alcatel Lucent, 75008 Paris (FR); Lucent Technologies Inc., Murray Hill NJ 07974-0636 (US)
(72) Inventor: Bennett, Andrew, Swindon, Wiltshire SN25 4ZN (GB); Palat, Sudeep, Swindon, Wiltshire SN5 6EE (GB); Tatesh, Said, Swindon, Wiltshire SN5 5Bw (GB); Drevon, Nicolas, 75016, Paris (FR); Thiebaut, Laurent, 92160, Antony (FR); Casati, Alessio, Swindon, Wiltshire SN5 5BG (GB)
(74) Representative: Schmit Chretien Schihin & Mahler

(57) **Abstract**

The present invention relates to a method for a handover of a UE (User Equipment) currently engaged in a voice call. More particularly, the invention relates to a handover from 1) a packet based radio where Voice Service is provided via VoIP over the radio and is controlled via Session Initiation Protocol (SIP) based signalling (e.g. LTE, E-UTRAN or WIMAX radio) to 2) a radio access network where Voice Service can be only provided via circuit switched (CS) domain (a visited mobile switching centre (VMSC) is needed) such as legacy 3GPP UMTS Terrestrial Radio Access Network (UTRAN)/ GSM/Edge Radio Access Network (GERAN) coverage. A MSC-S entity acting as a Packet Core Control Node on a Packet Switched (PS) network and as an Anchor Visited Mobile Switching Centre (VMSC) for a handover to a Circuit Switched (CS) network on the CS domain side is proposed, the MSC-S preparing a new path with a remote UE-B and a CS domain handover towards a target legacy radio coverage before requesting a UE-A to execute the handover.

## Description

The present invention relates to a method for a handover of a UE (User Equipment) currently engaged in a voice call. More particularly, the invention relates to a handover from 1) a packet based radio where Voice Service is provided via VoIP over the radio and is controlled via Session Initiation Protocol (SIP) based signalling (e.g. LTE, E-UTRAN or WIMAX radio) to 2) a radio access network where Voice Service can be only provided via circuit switched (CS) domain (a visited mobile switching centre (VMSC) is needed) such as legacy 3GPP UMTS Terrestrial Radio Access Network (UTRAN)/ GSM/Edge Radio Access Network (GERAN) coverage. The application particularly applies to the case where the UE is not able to transmit/receive on both radio accesses simultaneously.

In the prior art (3GPP TS 23.206) it is assumed that the UE is able to transmit/receive on both radio accesses simultaneously. This allows a handover to be make-before-break, and so there is minimal interruption to the voice service detected by the user. When a handover is required (as detected by the UE, e.g. based on radio measurements) the UE creates a new call/session in the new domain, while maintaining the voice service in the existing domain. Once the new call/session is established, the network (namely a VCC Application) switches the voice media to this new call/session and then releases the network resources in the previous domain. Thus, handover from 1) packet based radio where Voice Service is provided via VoIP over the radio and is controlled via SIP based signalling (e.g. Wifi) to 2) a location (such as legacy UTRAN/GERAN) where Voice Service can be only provided via CS domain is only possible for Dual Radio mobiles, i.e. mobiles able to simultaneously transmit and receive on packet based radio (e.g. Wifi) and cellular radio (such as legacy UTRAN/GERAN). This is because Voice Call Continuity (VCC) as currently specified requires to register on CS domain and to send a call request over CS domain while the terminal is still sending/receiving voice over the Packet radio

The present invention proposes a mechanism for handover of an UE-A currently engaged in a Voice Call with a remote UE-B from a packet based radio network where Voice Service is provided via VoIP over the radio and is controlled via SIP based signalling (e.g. LTE/E-UTRAN/ Enhanced Packet Core (EPC)) to legacy 3GPP GERAN/UTRAN CS domain that works for Single Radio UEs by introducing a new entity named Mobile Switching Center (MSC) Server "MSC-S" (or "CS-proxy") that sits on both the Packet Switched (PS) and Circuit Switched (CS) domains. More specifically this entity:
• acts as a network Control Node (e.g. MME in case of E-UTRAN radio) on the Packet Switched radio side, and
• acts as an Anchor Visited Mobile Switching Centre (VMSC) for the handover to the Circuit Switched network on the CS domain side.

According to an aspect of the invention, when the radio network has detected that a handover to legacy coverage is needed that requires to pass the Voice Service from the PS domain to CS domain, such MSC-S upon reception of relevant triggers co-ordinates following processes:
• The process of preparing a new path towards the remote UE-B. This preparation of a new path relies on a VCC procedure by establishing a new CS domain call towards the Voice Call Continuity Application Server (VCC AS) of the moving UE-A sitting over IMS. It is declared over when the MSC-S has received an ANM (ISUP (ISDN User part) Answer Message).
• The process of preparing a CS domain handover towards the target legacy radio coverage, i.e. of requesting the target Radio Access Network (RAN) (e.g. GERAN/UTRAN) for radio resources in the target cell.

When both processes are completed, the MSC-S commands the UE-A for handover execution and instructs a Media Gateway (MGW) to connect the path towards UE-B with the path towards the target radio.

The proposed mechanism thus progresses and coordinates the existing VCC (TS 23.206) procedures (which are at the IMS layer) in parallel with existing inter-MSC handover procedures in order to minimize the voice break detected by the user.

The proposed mechanism (apart from the addition of a MSC-S function - that may be co-located with an existing MSC or may be deployed as a stand-alone box) does neither induce modification to the legacy RAN (GERAN/UTRAN), nor modification to IMS Core and AS, and does not impact the remote UE (UE-B) beyond the impacts already defined in existing VCC procedures.

During the process of preparing a new path towards the remote UE-B (using a VCC procedure), the MSC-S entity according to an aspect of the invention reserves resources at its MGW and sends an IAM (ISUP Initial Address Message) via an MGCF (Media Gateway Control Function -possibly co-located) towards the VCC AS of the UE-A in his/her home network (HPLMN).

Note that if the (A, Iu,...) interface towards the target RAN (controlling target GERAN/LTTRAN radio) is not controlled by the MSC-S but by a different MSC, called MSC-B, an inter-MSC HO procedure is invoked, whereby the MSC-S is acting as anchor MSC. In this case, the MSC-B (that controls the target Radio GERAN/UTRAN) is not aware that the inter-MSC HO procedure is actually invoked as part of a more global procedure (Single Radio VCC procedure of the invention).

A handover method according to an embodiment of the invention comprises the following steps:
A packet radio base station (such as an eNB for E-UTRAN) initiates a handover of a voice call towards CS domain over legacy radio, wherein an MSC-S entity is invoked, this MSC-S entity being interfaced to a packet Core signalling entity on one side and acting as a VMSC to a CS core on the other side;
The MSC-S initiates, as an anchor MSC, a CS domain handover via the legacy Radio;
The packet radio base station (e.g. eNB) sends a CS Handover Request to the UE-A to request the UE-A to initiate a VCC procedure via the MSC-S, thereby initiating a setup towards a VCC Application function identified by a VDN identifier; optionally, MSC-S waits for the completion of the handover preparation phase;
Upon the UE-A having initiated VCC procedure via the MSC-S, the MSC-S starts processing of an originating call in the CS network towards the VCC AS providing Voice Call Continuity to the User-A and the full VCC procedure applies;
MSC-S routes the call towards the user's home IMS network via an MGCF;
The MGCF reserves connection resources in the attached MGW (that provides the new user plane address where to send voice traffic towards UE-A) and forwards the session set-up (including the new user plane address where to send voice traffic towards UE-A) towards the VCC AS that triggers the VCC procedure, that transfers to the remote UE-B via SIP signalling the new user plane address where to send voice traffic towards UE-A;
Upon receiving this information, the UE-B acknowledges it, disconnects its user plane from the previous path, and connects it to the new path towards the MGW;
This acknowledgement (2000K) is transferred via the MGCF that replies to the MSC-S with an ANM message;
The MSC-S requests the UE-A to perform Handover Execution phase;
The target RAN (GERAN/UTRAN) detects the UE-A (in the new cell), and sends Handover Detect towards MSC-B;
The MSC-B commands its MGW to connect the path towards UE-B (established via the VCC procedure) with the path towards the target radio where the UE-A has been handed-over to;
If the MSC-B is a separate node from MSC-S, MSC-B sends MAP-PROCESS-ACCESS-SIGNALLING request to MSC-S;
The UE-A sends Handover Complete to the target RAN, which notifies MSC-B;
If the MSC-B is a separate node from MSC-S, MSC-B sends MAP-SEND-END-SIGNAL request to MSC-S.

According to an embodiment of the present invention, the method is characterised in that the packet radio base station (such as an eNB for E-UTRAN) sends a Relocation/Handover Required message to a mobile Packet Core signalling entity (such as the MME in case of an Evolved Packet Core) indicating a handover target cell and that it is a handover to circuit switched domain. The mobile Packet Core signalling entity (e.g. MME) selects a MSC-S entity and relays the Relocation/Handover Required message to this MSC-S entity. The selected MSC-S then initiates the process of reservation of network resources on the target radio network. This process may involve another MSC (MSC-B) that directly interfaces the controller (e.g. BSC/RNC) of the target Node B/BTS. In an embodiment of the present invention, the mobile Packet Core signalling entity (such as a MME) may consider the MSC-S as another mobile Packet Core signalling entity (such as another MME).

According to an embodiment of the present invention, the CS handover procedure invoked by MSC-S may entail an inter MSC handover if the MSC-S does not have the interface to control the RAN (GERAN/UTRAN) serving the cell where the UE-A is going to handed-over to.

According to a further embodiment of the invention, the VCC procedure initiation by the UE-A corresponds to a CS domain setup message towards a VCC Domain Transfer Number (VDN) and this message is tunnelled through the mobile Packet Radio (e.g. UTRAN) and Core Networks (eNB and MME) towards the MSC-S.

In a typical embodiment of the invention, the CS domain setup procedure towards a VDN is controlled using Customized Applications for Mobile Network Enhanced Logic (CAMEL), wherein the actual address of the VCC AS serving the user of UE-A (in his/her Home PLMN) is resolved using the VDN and possibly the identity of this user.

According to a typical method according to the invention, the packet radio base station (e.g. eNB) orders measurements of the neighbour cells to the UE-A before initiating the handover and, upon reports received from the UE-A, decides to perform a handover to a CS target cell.

In a method according to another embodiment of the invention, the UE-A sends a Handover Complete message to the MSC-S (relayed via RNC/BSC and via MSC-B if an inter MSC HO was needed), and MSC-S sends relevant signalling to the mobile Packet Core signalling entity (such as a MME) in order to release network resources in the mobile Packet Core (e.g. EPC) and the packet Radio (e.g. E-UTRAN).

In the same way as in UMTS, the radio "Base Station" on the PS radio (such as eNB (Enhanced NodeB) for LTE) may order measurements of neighbor cells to the UE-A and is able to decide a handover to a CS target cell. When the decision is taken, the radio "Base Station" on the PS radio (e.g. eNB) sends a handover request towards its network Control Node (e.g. MME in case of E-UTRAN radio) that relays the request to the MSC-S. It also requests the UE-A to initiate a VCC (Voice Call Continuity) Domain Transfer to CS by initiating a SETUP towards a VDN (VCC Domain Transfer Number), as specified in 3GPP TS 23.206. The SETUP message is tunneled through the packet radio (e.g. E-UTRAN) and Core (e.g. EPC) network towards the MSC-S.

The MSC-S waits for completion of the handover preparation phase, i.e. network and radio resources reserved towards the target network, and for the SETUP (VDN) message sent by the UE-A. Then an originating call is processed in the CS network according to CS origination procedures of VCC invoking CAMEL (Customized Applications for Mobile Network Enhanced Logic): the CAMEL Service reroutes the call to the IMS VCC AS (Voice Call Continuity Application Server) that serves the UE-A. Then, the MSC-S (acting as a VMSC) routes the call towards the user's home IMS (IP Multimedia Subsystem) network via an MGCF (Media Gateway Control Function) in the home network.

The MGCF reserves connection resources in the corresponding MGW (Media Gateway) it controls and forwards the call request for the new path to the UE-B via VCC AS through IMS call control. VCC AS sends a SIP message (e.g. SIP Re-Invite message) to the UE-B to change the address where it sends its user plane to be sent to UE-A. Upon receiving this SIP message, the UE-B replies with 200 OK, disconnects its user plane from the previous path and connects it to the new path towards the MGW. The MGCF orders the corresponding MGW to connect the UE-B path to the MSC-S path and replies to the MSC-S with an ISUP Answer message (ANM) message. The MSC-S knows that the path with UE-B is established and can now request the UE-A to perform Handover Execution phase i.e. to switch its radio to the target cell.

The target NodeB/BTS (Base Transceiver Station) detects the UE-A and sends Handover Detect to the RNC (Radio Network Controller) / BSC (Base Station Controller) that will relay it to MSC-S (possibly via MSC-B if the MSC-S needs another MSC-B to terminate the link with controller of the target radio). MSC-S connects the UE-A path (over the new radio) to the UE-B path (via the MGW). At this point, user plane is end-to-end connected. The UE-A sends Handover Complete message to the RNC/BSC that relays it to the MSC-S (possibly via MSC-B) in order to release network resources in the packet based Core (e.g. EPC -Enhanced Packet Core) network and packet based radio (e.g. E-UTRAN - Enhanced UTRAN) that the UE-A has just left.

Further, the invention concerns a MSC-S entity adapted to perform the method according to the invention and a mobile telecommunication network adapted to perform the method according to invention.

According to the invention, a new MSC-Serving entity is introduced as a VMSC interfaced to MME (Mobility Management Entity) on one side and to CS (Circuit Switched) core on the other side. It corresponds to the MSC (Mobile Switching Centre) entity that serves the UE-A, and acts as an Anchor MSC function, forwarding the handover required by the eNB towards the CS target network. The MSC-S behavior is based on existing MSC behavior, but some changes are required for the solution according to the invention, therefore introducing a new entity means so that existing MSC's do not need to be modified.

There are several significant advantages to the above described solution: The method according to the invention has no impact to the existing Core Network nodes. Further it has no impact to the existing RAN (Radio Access Network) nodes (UTRAN, GERAN), to the IMS network and to VCC applications. Further, the user plane interruption is minimized: it corresponds to the addition of the processing and transmission of the ANM and Relocation Command messages, estimated between 5 and 10 ms, to the inevitable handover execution time that is defined as the interruption time on Layer 1 and estimated between 50 and 100 ms.

In addition, the handover preparation phase is minimized as the steps to initiate a VCC procedure until receiving Setup (VDN) message may be performed in parallel with the legacy handover preparation phase (from Relocation/Handover Required to MAP (Mobile Application Part) Prepare HO (handover) Response). Moreover, these steps are expected to be short compared to the legacy handover preparation phase.

Further, the MSC-S can be distributed, so the method according to the invention is a scalable solution. Finally, if the MSC-S is in the VPLMN (Visited Public Land Mobile Network), the routing tables are the same as a legacy MSC.

It should be noted that basically the above mentioned aspects of the invention may be combined in many useful ways. Furthermore, it should be noted that the disclosure of the invention also covers other claim combinations than the claim combinations which are explicitly given by the back references in the dependent claims, i.e., the claims may be basically combined in any order.

Further aspects, advantages and features of the present invention are apparent from the dependent claims, the detailed description and the accompanying drawings, in which:

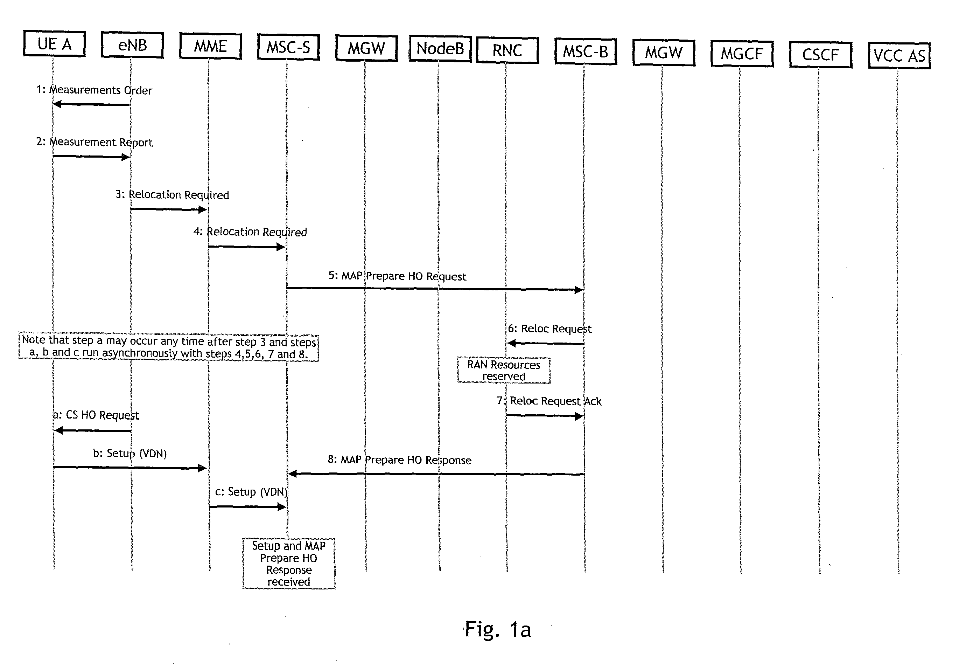

- Fig. 1a: shows a first flow chart; and

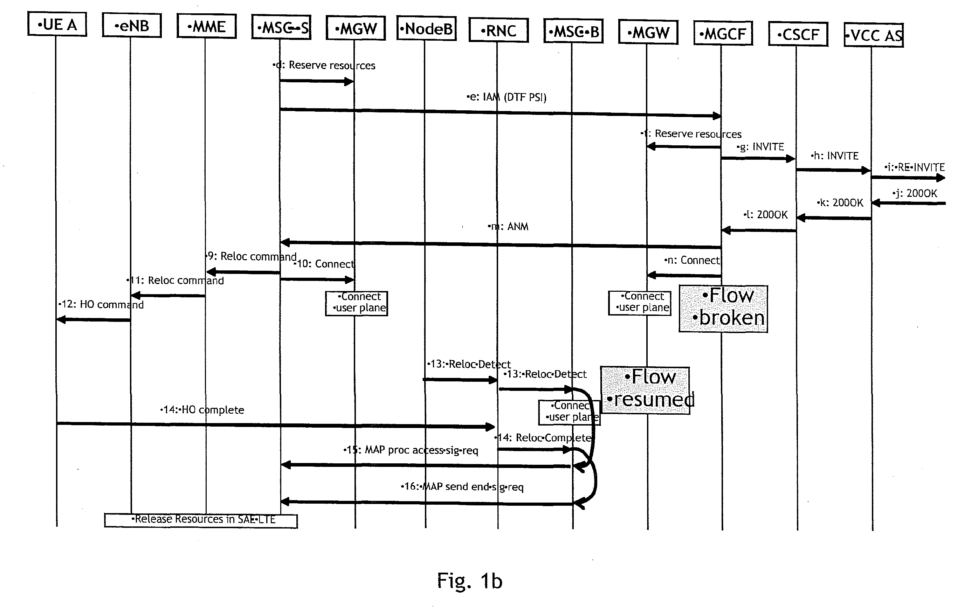

- Fig. 1b: shows a second flow chart subsequent to the first flow chart.

In Fig. 1a and Fig. 1b flow charts of an embodiment of the handover according to the invention are shown. The flow charts represent UMTS/UTRAN entities and messages, but it also applies to GERAN entities and messages.

According to the embodiment of the invention shown in the Figs. 1a and 1b the following messages are sent and operations are performed for the handover of a UE-A from E-UTRAN to UTRAN/GERAN CS :
1- eNB requests UE-A to perform measurements on neighbor cells.
2- UE-A performs measurements and sends measurement reports to the eNB.
3- eNB determines that a handover to UTRAN or GERAN CS domain should be performed. It sends a Relocation/Handover Required message to the MME indicating the target cell and that it is a handover to CS domain.
4- The MME selects a MSC-S in the same PLMN (Public Land Mobile Network) and relays the Relocation/Handover Required message to the MSC-S node.
5- As the MSC-S node is in the same PLMN, it is configured with necessary tables enabling to determine MSC-B and forward the handover request via MAP Prepare HO Request to MSC-B.
6- MSC-B sends Relocation/Handover Request to the target RNC/BSC.
7- The target UTRAN /GERAN reserves the RAN resources and replies with Relocation/Handover Request Ack to MSC-B.
8- MSC-B sends MAP Prepare HO Response back to MSC-S.
   a. In parallel with steps 4 to 8 and at any time after step 3, when the eNB determined that a handover to UTRAN or GERAN CS domain should be performed, it sends a CS Handover Request to the UE-A to request the UE-A to initiate a call to VDN number to MSC-S.
   b. UE-A sends the Setup (VDN) message to MME.
   c. MME selects an appropriate MSC-S node and relays the Setup (VDN) message to MSC-S.
   d. The MSC-S reserves resources at the corresponding MGW.
   e. When MSC-S has received Setup (VDN) from UE-A and the completion of handover preparation phase from MSC-B via MAP Prepare HO Response, the originating call is processed in the CS network according to CS origination procedures described in clause 6.2.2.2 of TS 23.206 "UE origination from CS domain invoking CAMEL": the CAMEL Service reroutes the call to the IMS by returning a DTF (PSI) DN, which is resolved using the VDN received from the UE by the CS network. The DTF (PSI) DN is resolved using the VDN at the CS network. The VMSC routes the call towards the user's home IMS network via an MGCF in the home network by sending an IAM (DTF PSI) to the MGCF. IAM is the abbreviation ISUP Initial Address Message.
   f. The MGCF reserves resources at the corresponding MGW.
   g. The MGCF sends an INVITE message to the UE-A CSCF (Call Session Control Function).
      Note: When the UE-A is in a roaming case, the MSC-S is in the VPLMN (Visited PLMN) and the MGCF may be in its HPLMN (Home PLMN); so the MSC-S MGW and the MGCF MGW may be separate nodes.
   h. The UE-A CSCF forwards the INVITE to the VCC AS.
   i. The VCC AS sends a RE-INVITE towards UE-B through its CSCF, that includes the user plane MGW address.
   j. UE-B replies with a 200 OK towards the VCC AS through its CSCF, and connects its user plane to the indicated MGW user plane address.
   k. The VCC AS forwards the reply to the CSCF.
   l. The CSCF forwards the reply to the MGCF.
   m. The MGCF sends ANM back to the MSC-S.
   n. The MGCF connects the user plane UE-B path to the MSC-S path. Note: these last two steps have no priority between them and can be performed in any sequence.
9- The MSC-S knows that the path with UE-B is established and can start the handover execution phase by sending Relocation/Handover Command to the MME.
10- In parallel to 9, MSC-S requests the corresponding MGW to connect the user plane.
11- MME sends Relocation/Handover Command to eNB.
12- eNB sends Handover Command to UE-A.
13- UE-A switches its radio to UTRAN/GERAN target cell. It may be detected by the NodeB/BTS. The NodeB/BTS sends Handover Detect to the RNC/BSC. The RNC/BSC relays Handover Detect to MSC-B. MSC-B connects the UE-A path to the UE-B path. At this point, user plane is end-to-end connected.
14- UE-A sends Handover Complete message to the RNC/BSC that relays it to the MSC-B.
15- MSC-B indicates Handover Detect via MAP PROC ACCESS SIG REQ to MSC-S in order to release serving network resources in EPC network and E-UTRAN. MSC-S releases all resources in E-UTRAN via MME.
16- MSC-B indicates the Handover Complete via MAP SEND END SIG REQ to MSC-S in order to release serving network resources in EPC network and E-UTRAN. MSC-S releases all resources in E-UTRAN via MME.

This written description uses examples to disclose the invention, including the best mode, and also to enable any person skilled in the art to make and use the invention. While the invention has been described in terms of various specific embodiments, those skilled in the art will recognise that the invention can be practiced with modification within the spirit and scope of the claims. Especially, mutually non-exclusive features of the embodiments described above may be combined with each other. The patentable scope of the invention is defined by the claims, and may include other examples that occur to those skilled in the art.

| **Acronym** | **Expansion** |
|---|---|
| ANM | ISUP Answer message |
| BSC | Base Station Controller |
| BTS | Base Transceiver Station |
| CAMEL | Customized Applications for Mobile Network Enhanced Logic |
| CS | Circuit Switched |
| CSCF | Call Session Control Function |
| DN | Directory Number |
| DTF | Domain Transfer Function |
| eNB | Enhanced NodeB |
| EPC | Enhanced Packet Core |
| E-UTRAN | Enhanced UMTS Terrestrial Radio Access Network |
| GERAN | GSM/Edge Radio Access Network |
| HO | Handover |
| IAM | ISUP Initial Address Message |
| IMS | IP Multimedia Subsystem |
| MAP | Mobile Application Part |
| MGCF | Media Gateway Control Function |
| MGW | Media Gateway |
| MME | Mobility Management Entity |
| MSC | Mobile Switching Centre |
| PLMN | Public Land Mobile Network |
| PSI | Public Service Identifier |
| RAN | Radio Access Network |
| RNC | Radio Network Controller |
| UE | User Equipment |
| UTRAN | UMTS Terrestrial Radio Access Network |
| VCC | Voice Call Continuity |
| VCC AS | Voice Call Continuity Application Server |
| VDN | VCC Domain Transfer Number |
| VPLMN | Visited Public Land Mobile Network |

## Claims

1. Method for handover of a User Equipment(UE)-A from E-UTRAN to UTRAN/GERAN CS by using a Mobile Switching Center Server (MSC-S) that is connected to a Packet Switched (PS) domain and a Circuit Switched (CS) domain and that acts as a Packet Core Control Node on the Packet Switched radio side and acts as an Anchor Visited Mobile Switching Centre (VMSC) for the handover to the Circuit Switched network on the Circuit Switched domain side the method comprising:
i) initiating the handover towards the MSC-S;
ii) sending a CS Handover Request to the UE-A to request the UE-A to initiate a setup towards a Voice Call Continuity (VCC) Application function;
iii) preparing a CS domain handover controlled by the MSC-S towards a target Radio Access Network (RAN);
iv) processing of an originating call in the CS network according to CS origination procedures of VCC, the processing steps comprising:
• routing of the call by the MSC-S towards a home IP Multimedia Subsystem (IMS) network via an Media Gateway Control Function (MGCF);
• requesting reservation of resources in an Media Gateway (MGW) and forwarding to the remote UE-B via a Voice Call Continuity Application Server (VCC AS) a new user plane path towards the UE-A that corresponds to the resources reserved in the MGW;
• disconnecting the user plane of the UE-B from the previous path and connecting it to the new path via the MGW; and
• replying from the UE-B to the MGCF via the VCC AS with a Session Initiation Protocol (SIP) message, and from the MGCF to the MSC-S with an ISUP (ISDN User part) Answer Message (ANM);
v) establishing a connection between the MSC-S and the UE-B via the MGW controlled by the MGCF;
vi) requesting the UE-A to perform a Handover Execution phase by the MSC-S;
vii) detecting the UE-A by a target NodeB or Base Transceiver Station (BTS);
viii) receiving a Handover Detect from the target NodeB/BTS; and
ix) connecting the UE-A path via the target NodeB/BTS to the UE-B path as the result of the completion of the CS handover.

2. Method according to claim 1, wherein a base station on the PS domain radio sends a Relocation/Handover Required message to the Core Control Node on the PS radio side indicating a target cell and that it is a handover to the CS domain, the Core Control Node on the PS radio side selecting a MSC-S and relaying the Relocation/Handover Required message to the selected MSC-S that then initiates the process of reservation of network resources on the target radio network.

3. Method according to claim 1 wherein in step ii) a SETUP message of the UE-A is tunnelled through the PS radio.

4. Method according to claim 1, wherein before step iv) the MSC-S synchronises the completion of the handover preparation phase, in particular the MSC-S waits for receipt of a SETUP message from the UE-A as part of VCC CS origination procedures and for the completion of the reservation of network resources on the target network.

5. Method according to claim 1, wherein steps ii) and iii) are performed in parallel.

6. Method according to claim 1, wherein before step i) the packet radio orders measurements of the neighbour cells to the UE-A and decides a handover to a CS target cell.

7. Method according to claim 1, wherein the UE-A sends a Handover Complete message to a RNC (Radio Network Controller) / BSC (Base Station Controller) that relays it to the MSC-S in order to release serving network resources in the Packet Core network and in the packet radio.

8. Method according to claim 1, wherein the processing of an originating call in the CS network uses Customized Applications for Mobile Network Enhanced Logic (CAMEL), and wherein the address of the VCC AS serving the UE-A is resolved using the VCC Domain Transfer Number (VDN) at the CS network.

9. MSC-S entity acting as a Packet Core Control Node on a Packet Switched (PS) network and as an Anchor Visited Mobile Switching Centre (VMSC) for a handover to a Circuit Switched (CS) network on the CS domain side, and adapted to prepare a new path with a remote UE-B and a CS domain handover towards a target legacy radio coverage before requesting a UE-A to execute the handover.

10. MSC-S entity according to claim 9 adapted to reserve resources at a Media Gateway (MGW) and send a message to a Media Gateway Control Function (MGCF) in the home network of the UE-A for routing the originating call towards UE-A's home IP Multimedia Subsystem (IMS).

11. MSC-S entity according to claim 10 adapted to, upon receiving a message from the MGCF confirming that UE-B has connected its user plane towards the MGW, request the UE-A to perform the handover execution.
